Europäisches Patentamt

European Patent Office

Office européen des brevets

(11) Veröffentlichungsnummer: **0 321 832 B1**

# (12) EUROPÄISCHE PATENTSCHRIFT

(45) Veröffentlichungstag der Patentschrift: **10.11.93**

(21) Anmeldenummer: **88120793.0**

(22) Anmeldetag: **13.12.88**

(51) Int. Cl.⁵: **C08L 33/08**, C08L 51/04

(54) Gummiartige thermoplastische Polymermischungen.

(30) Priorität: **22.12.87 DE 3743488**

(43) Veröffentlichungstag der Anmeldung:
**28.06.89 Patentblatt 89/26**

(45) Bekanntmachung des Hinweises auf die
Patenterteilung:
**10.11.93 Patentblatt 93/45**

(84) Benannte Vertragsstaaten:
**DE FR GB IT NL SE**

(56) Entgegenhaltungen:
**EP-A- 0 122 516**

(73) Patentinhaber: **BAYER AG**

**D-51368 Leverkusen(DE)**

(72) Erfinder: **Piejko, Karl-Erwin, Dr.**
**Unterscheider Weg 7a**
**D-5060 Bergisch Gladbach 2(DE)**
Erfinder: **Billinger, Otto, Dipl.-Ing.**
**Birkenstrasse 13**
**D-5460 Linz(DE)**
Erfinder: **Meier, Lothar, Dr.**
**Buchenstrasse 31b**
**D-4322 Sprockhövel 2(DE)**
Erfinder: **Lindner, Christian, Dr.**
**Riehler Strasse 200**
**D-5000 Köln 60(DE)**
Erfinder: **Ott, Karl-Heinz, Dr.**
**Paul-Klee-Strasse 54**
**D-5090 Leverkusen(DE)**

## Beschreibung

Die Erfindung betrifft weiche, hochelastische Polymermischungen mit gummiartigen Eigenschaften, die thermoplastisch verarbeitbar sind, ohne zusätzliche Verarbeitungsschritte wie Vulkanisation bei der Formgebung.

Weiche Polymerlegierungen enthaltend Pfropfkautschuke mit niedrigem Kautschukgehalt und Acrylatkautschuke sind bekannt (EP-A 122 516). Diese Legierungen enthalten größere Mengen Matrix-Polymerisat, das als kontinuierliche Phase für den Zusammenhalt und die Festigkeit der Polymermischung nach Formgebung mitverantwortlich ist. Beispielsweise stellt das Matrixpolymerisat in einem Pfropfpolymerisat die Pfropfhülle aus polymerisiertem harzbildenden Monomeren und das zusätzlich vorhandene freie Copolymerisat dieser Monomeren dar.

Reduziert man die Menge dieses Matrixpolymerisats und erhöht den Gehalt an hochvernetzten partikelförmigen Anteilen, so erwartet man normalerweise, daß nur noch ein lockerer Zusammenhalt (bei oder nach thermoplastischer Formgebung) zwischen den Partikeln möglich ist und damit unbefriedigende physikalische Eigenschaften.

Es wurde nun gefunden, daß sich im Gegensatz zur Erwartung Polymermischungen mit guten Eigenschaften herstellen lassen, die nur geringe Mengen Matrixharz enthalten müssen, wenn man spezielle hochvernetzte Kautschukpartikel auswählt.

Gegenstand der Erfindung sind somit Polymermischungen aus

a) 10 bis 50 Gew.-Teilen, insbesondere 10 bis 40 Gew.-Teilen, eines Pfropfpolymerisates aus 60 bis 85 Gew.-%, insbesondere 70 bis 85 Gew.-%, eines teilchenförmigen hochvernetzten Dien- oder Alkylacrylatkautschuks und 40 bis 15 Gew.-%, insbesondere 30 bis 15 Gew.-%, darauf propfpolymerisiertem Alkylmethacrylat, Acrylnitril, Styrol, Alkylacrylat, oder Mischungen daraus und

b) 90 bis 50 Gew.-Teilen, insbesondere 90 bis 60 Gew.-Teilen eines teilvernetzten, teilchenförmigen, kautschukartigen Copolymerisats aus 10 bis 35 Gew.-% Acrylnitril und/oder Methylmethacrylat und 90 bis 65 Gew.-% $C_1$-$C_8$-Alkylacrylat mit einem Gelgehalt von 60 bis 99 Gew.-%, insbesondere 75 bis 99 Gew.-%, und einem mittleren Teilchendurchmesser ($d_{50}$) von 0,1 bis 0,6 $\mu$m, insbesondere von 0,1 bis 0,3 $\mu$m.

Diese Gemische stellen thermoplastisch verarbeitbare Formmassen dar, die gummiartige Eigenschaften besitzen, insbesondere Weichheit und Dehnbarkeit.

Die Polymerisate a) und b) sind im Prinzip bekannt.

Pfropfpolymerisate a) im Sinne der Erfindung sind i.a. Emulsionspolymerisate mit Teilchenstruktur. Sie bestehen aus einem teilchenförmigen Kautschuk (Dienkautschuk oder Alkylacrylatkautschuk) mit einem Gelgehalt von größer 80 Gew.-% und mittleren Teilchendurchmessern ($d_{50}$) von 0,08 bis 0,7 $\mu$m, als Pfropfgrundlage und darauf pfropfpolymerisierten Monomeren wie Alkyl(meth)acrylat, Styrol, Acrylnitril.

Dienkautschuke sind z.B. Polybutadien, Polyisopren und Copolymerisate von Butadien mit bis zu 35 Gew.-% Comonomeren wie Styrol, Acrylnitril, Methylmethacrylat, $C_1$-$C_6$-Alkylacrylat. Sie können durch wäßrige, radikalische Emulsionspolymerisation erzeugt werden. Acrylatkautschuke sind z.B. vernetzte teilchenförmige Emulsionscopolymerisate aus $C_1$-$C_6$-Alkylacrylaten; insbesondere $C_2$-$C_6$-Alkylacrylaten, gegebenenfalls in Mischung mit bis zu 15 Gew.-% Comonomeren wie Styrol, Methylmethacrylat, Butadien, Vinylmethylether, Acrylnitril und wenigstens einem polyfunktionellen vernetzendem Comonomeren, z.B. Divinylbenzol, Glykol-bis-acrylate, Bisacrylamide, Phosphorsäuretriallylester, Zitronensäuretrisallylester, Allylester von Acrylsäure und Methacrylsäure oder Triallylcyanurat, Triallylisocyanurat, wobei die Acrylatkautschuke bis zu 4 Gew.-% der vernetzenden Comonomere enthalten können.

Geeignet sind auch Gemische von Dien- und Alkylacrylatkauschuken sowie Kautschuke mit einer sogenannten Kern-Mantel-Struktur (z.B. Dienkautschuk-Kern und Acrylat-Mantel oder Acrlyatkautschuk-Kern und Dienkautschuk-Mantel). Kern-Mantel-Kautschukteilchen werden bevorzugt. Sämtliche Kautschuke müssen natürlich in Form kleiner diskreter Teilchen vorliegen. Bevorzugte pfropfpolymerisierte Monomere sind Methylmethacrylat gegebenenfalls mit bis zu 50 Gew.-% $C_1$-$C_6$-Alkylacrylat, Acrylnitril oder Styrol.

Die Pfropfpolymerisate a) können hergestellt werden, indem man in einer ersten Stufe durch Emulsionspolymerisation eine Emulsion der gewünschten Kautschukteilchen erzeugt und in einer zweiten Stufe in an sich bekannter weise Vinylmonomere radikalisch in Gegenwart der Kautschukemulsion polymerisiert, so daß wenigstens ein Teil der Monomeren chemisch an den Kautschuk gebunden (= aufgepropft) wird. Die Menge des aufgepropften Polymerisats kann durch Messung des Pfropfgrades oder der Pfropfausbeute bestimmt werden. Als Pfropfpolymerisate im Sinne der Erfindung werden unabhängig vom Pfropfgrad die Reaktionsprodukte der Polymerisation von Vinylmonomeren in Anwesenheit der Kautschukemulsion angesehen. Pfropfpolymerisate a) im Sinne der Erfindung haben bevorzugt eine möglichst hohe Pfropfausbeute, die beispielsweise durch die Verwendung hochaktiver Redox-Initiatoren erreicht wird.

Polymerisate b) im Sinne der Erfindung sind teilvernetzte kautschukartige Interpolymerisate aus b1) 10 bis 35 Gew.-Teilen Acrylnitril und/oder Methylmethacrylat und (b2) 90 bis 65 Gew.-Teilen Alkylacrylat, insbesondere $C_3$-$C_8$-Alkylacrylat, sowie 0,05 bis 5 Gew.-%, bezogen auf die Summe b1) + b2), einer polyfunktionellen, copolymerisierbaren Vinyl- oder Allylverbindung, vorzugsweise Triallylcyanurat, Triallylisocyanurat, Vinylether von Polyolen, Vinyl- oder Allylester polyfunktioneller Carbonsäuren und Bisacrylamide von Diaminen; die Polymerisate b) besitzen Gelgehalte von 60 bis 99 Gew.-%, insbesondere größer 70 Gew.-% und mittlere Teilchendurchmesser ($d_{50}$) von 0,1 bis 0,6 $\mu$m.

Polymerisate b) können in bekannter Weise durch radikalische, wäßrige Emulsionspolymerisation in Gegenwart anionischer, oberflächenaktiver Stoffe im Temperaturbereich von 40 bis 95°C, insbesondere 55 bis 80°C hergestellt werden.

Bevorzugte erfindungsgemäße Polymermischungen enthalten Pfropfpolymerisate a) aus 70 bis 85 Gew.-% vernetzten Acrylatkautschukteilchen mit pfropfpolymerisiertem Methylmethacrylat in Mischung mit bis zu 20 Gew.-% Alkylacrylat; bevorzugte Polymerisate b) sind hochvernetzte Interpolymerisate aus 15 bis 35 Gew.-% Acrylnitril und 85 bis 65 Gew.-% Alkylacrylat, insbesondere Butylacrylat.

Die weichen Polymermischungen können hergestellt werden, indem man die aus ihren Emulsionen durch Koagulation oder Direkttrocknung (Sprühtrocknung) isolierten und gereinigten Polymerisate miteinander z.B. in Schnecken oder Knetern vermischt. Bevorzugt werden die wäßrigen Emulsionen von a) und b) in den erforderlichen Mengen (entsprechend ihrem Polymerisatgehalt) miteinander vermischt. Die Emulsionsmischung (Latexmischung) wird dann koaguliert oder direkt getrocknet; die resultierenden Produkte stellen Formmassen für eine weitere Verarbeitung zu Kunststoffartikeln dar.

Formmassen aus den erfindungsgemäßen Mischungen besitzen viele Eigenschaften üblicher vulkanisierter Kautschuke oder thermoplastischer Elastomerer; hervorzuheben ist ihre besondere Kombination von Dehnungsfähigkeit, Weichheit und Festigkeit. Durch das Mischungsverhältnis von a) und b) lassen sich diese Eigenschaften einstellen und die Kältefestigkeit beeinflussen; während Mischungen auf der Basis von Dienkautschuken günstige Eigenschaften bei tiefen Temperaturen aufweisen, besitzen Formmassen auf der Basis von Acrylatkautschuken hervorragende Alterungsbeständigkeit. Da die Komponenten a) und b) hochvernetzte Polymere darstellen, enthalten die Formmassen nur wenig flüchtige oder migrierende Verunreinigungen im Vergleich zu bekannten vernetzten Formmassen. Die erfindungsgemäßen Massen sind besonders unempfindlich gegenüber technisch üblichen Lösungsmitteln. Sie eignen sich zur Herstellung von Beschichtungen, Dichtungsmassen, Folien, Dämpfungsmaterialien und Gummiartikeln.

Beispiele

1) Eingesetzte Pfropfpolymerisate (a)

1.1) Pfropfpolymerisat aus 80 Gew.-Teilen eines grobteiligen Polybutadiens eines mittleren Teilchendurchmessers ($d_{50}$) von 0,4 $\mu$m und einem Gelgehalt (in Toluol) von 89 Gew.-% der Pfropfbasis und 20 Gew.-Teilen pfropfpolymerisierter Monomerer aus 90 Gew.-% Methylmethacrylat und 10 Gew.-% n-Butylacrylat, hergestellt durch radikalische Emulsionspolymerisation eines Gemischs aus Methylmethacrylat und n-Butylacrylat in Anwesenheit des Polybutadienlatex. Der dabei anfallende Pfropfpolymerlatex mit einem Polymerfeststoffgehalt von 35 Gew.-% wird direkt zur Herstellung der Mischungen eingesetzt.

1.2) Pfropfpolymerisat, hergestellt analog 1.1) aus 70 Gew.-Teilen Polybutadien und 30 Gew.-Teilen Methylmethacrylat/n-Butylacrylat (90/10). Der Polymergehalt des Latex beträgt 35 Gew.-%.

1.3) Pfropfpolymerisat aus 70 Gew.-Teilen eines grobteiligen Acrylatkautschuks eines mittleren Teilchendurchmessers ($d_{50}$) von 0,52 $\mu$m und einem Gelgehalt (in Dimethylformamid) von 95 Gew.-% (hergestellt durch vernetzende Copolymerisation von n-Butylacrylat/Triallylcyanurat gemäß EP-A 34 748) und 30 Gew.-Teilen pfropfpolymerisierter Monomerer aus 90 Gew.-% Methylmethacrylat und 10 Gew.-% n-Butylacrylat, hergestellt durch radikalische Emulsionspolymerisation. Der anfallende Pfropfpolymerlatex besitzt einen Polymerfeststoffgehalt von 37 Gew.-% und wird wie bei 1.1) und 1.2) in Latexform zur Herstellung der Mischungen 3) eingesetzt.

2) Eingesetzte Kautschuke (b)

2.1) Kautschuke im Sinne der Erfindung

In einem Reaktor werden eine Lösung von 2,5 Gew.-Teilen Na-Salz von $C_{14}$-$C_{18}$-Alkylsulfonsäuren und 750 Gew.-Teilen Wasser vorgelegt. Nach Aufheizen auf 70°C gibt man 70 Gew.-Teile der Monomerlösung A) hinzu und initiiert die Polymerisation durch Zugabe einer Lösung von 3,5 Gew.-Teilen Kaliumperoxidsulfat in 50 Gew.-Teilen Wasser. Bei 70°C dosiert man den Rest der Lösung A) sowie die Lösung B) gleichmäßig innerhalb von 6 Stunden in den Reaktor ein und polymerisiert innerhalb von 4 Stunden aus. Es wird ein Latex mit einem Polymerfeststoffgehalt von 37 Gew.-%,

EP 0 321 832 B1

einem mittleren Teilchendurchmesser ($d_{50}$) von 0,18 $\mu$m und einem Gelgehalt (in DMF) von 98 Gew.-% erhalten.

```
Lösung A:   1.105 Gew.-Teile  n-Butylacrylat
                7 "               Triallylcyanurat
              474 "               Acrylnitril

Lösung B:      30 Gew.-Teile  Na-Salz von C14-C18-
                                 Alkylsulfonsäuren
            1.790 "               Wasser
```

2.2) Kautschuk zum Vergleich

In einem Reaktor werden eine Lösung von 5 Gew.-Teilen Na-Salz von $C_{14}$-$C_{18}$-Alkylsulfonsäuren und 1.030 Gew.-Teilen Wasser vorgelegt. Nach Aufheizen auf 70°C gibt man 80 Gew.-Teile Monomerlösung A) hinzu und initiiert die Polymerisation durch Zugabe einer Lösung von 4 Gew.-Teilen Kaliumperoxidisulfat in 100 Gew.-Teilen Wasser. Bei 70°C dosiert man den Rest der Lösung A) sowie die Lösung B) gleichmäßig innerhalb von 5 Stunden in den Reaktor ein und polymerisiert innerhalb von 4 Stunden aus. Es wird ein Latex mit einem Polymerfeststoffgehalt von 30 Gew.-%, einem mittleren Teilchendurchmesser ($d_{50}$) von 0,20 $\mu$m und einem Gelgehalt (in DMF) von 95 Gew.-% erhalten.

```
Lösung A:     995 Gew.-Teile  n-Butylacrylat
                5 "               Triallylcyanurat

Lösung B:      25 Gew.-Teile  Na-Salz von C14-C18-
                                 Alkylsulfonsäuren
              700 "               Wasser
```

3) Herstellung und Eigenschaften der Polymermischungen

Die Latices 1 werden miteinander vermischt, so daß die in Tabelle 1 angegebenen Mengen der Latexfeststoffe eingehalten werden. Nach Stabilisierung mit 1 Gew.-% eines phenolischen Antioxidans (bezogen auf 100 Gew.-Teile Feststoff) wird die Latexmischung mit wäßriger Magnesiumsulfat-Lösung koaguliert, gewaschen und bei 70°C getrocknet.

4

Tabelle 1

| Zusammensetzung der Polymermischungen (Angaben in Gew.-Teilen) | | | | | |
|---|---|---|---|---|---|
| Versuch Nr. | Pfropfpolymerisate | | | Kautschuke | |
| | Typ | | | Typ | |
| | 1.1 | 1.2 | 1.3 | 2.1 | 2.2 |
| 3.1 | 25 | | | 75 | |
| 3.2 | | 25 | | 75 | |
| 3.3 | | | 25 | 75 | |
| 3.4 | 30 | | | 70 | |
| 3.5 | | | 30 | 70 | |
| 3.6 (Vergleich) | 30 | | | | 70 |

Die Polymermischungen 3.1 bis 3.6 werden auf einer Walze bei 230°C 5 Minuten lang compoundiert; dabei werden als Verarbeitungshilfsmittel 2,8 Gew.-% Esterwachs zugefügt. Danach wird das gebildete Walzfell bei 240°C zu Prüfkörpern verpreßt. In Tabelle 2 sind die Eigenschaften angegeben.

**Tabelle 2  Eigenschaften**

| Versuch Nr. | Zugfestigkeit (MPA) | Dehnung $E_R$ (%) | Weiterreißfestigkeit (MPA) | Shore Härte A/D | Kältefestigkeit (°C) |
|---|---|---|---|---|---|
| 3.1 | 14 | 305 | 28 | 60/11 | -20 |
| 3.2 | 13 | 272 | 30 | 72/17 | -10 |
| 3.3 | 13,5 | 320 | 22 | 50/ 0 | - 5 |
| 3.4 | 13 | 286 | 25 | 68/11 | -20 |
| 3.5 | 14 | 280 | 24 | 55/ 5 | - 6 |
| 3.6 | 9 | 92 | 23 | 13/ 0 | ./. |

EP 0 321 832 B1

| Prüfmethodik | |
|---|---|
| Zugfestigkeit | nach DIN 53 455 |
| Dehnung | nach DIN 53 455 |
| Weiterreißfestigkeit | nach DIN 53 515 |
| Shore Härte | nach DIN 53 505 |
| Kältefestigkeit | nach DIN 53 372 (Fallhammermethode) |

**Patentansprüche**

1. Weiche Polymermischungen aus
   a) 10 bis 50 Gew.-Teilen eines Pfropfpolymerisates aus 60 bis 85 Gew.-% eines teilchenförmigen hochvernetzten Dien- oder Alkyl-acrylatkautschuks und 40 bis 15 Gew.-% pfropfpolymerisiertem Alkylmethacrylat, Acrylnitril, Styrol, Alkylacrylat oder Mischungen daraus und
   b) 90 bis 50 Gew.-Teilen eines teilvernetzten, teilchenförmigen, kautschukartigen Copolymerisats aus 10 bis 35 Gew.-% Acrylnitril und/oder Methylmethacrylat und 90 bis 65 Gew.-% $C_1$-$C_8$-Alkylacrylat mit einem Gelgehalt von 60 bis 99 Gew.-% und einem mittleren Teilchendurchmesser ($d_{50}$) von 0,1 bis 0,6 $\mu$m.

**Claims**

1. Soft polymer mixture of
   a) from 10 to 50 parts by weight of a graft polymer of from 60 to 85% by weight of a particulate, highly cross-linked diene or alkyl acrylate rubber and from 40 to 15% by weight of graft polymerised alkyl methacrylate, acrylonitrile, styrene, alkyl acrylate or mixtures thereof and
   b) from 90 to 50 parts by weight of a partially cross-linked particulate, rubber-like copolymer of from 10 to 35% by weight of acrylonitrile and/or methyl methacrylate and from 90 to 65% by weight of $C_1$ to $C_8$ alkyl acrylate, having a gel content of from 60 to 99% by weight and an average particle diameter ($d_{50}$) of from 0.1 to 0.6 $\mu$m.

**Revendications**

1. Mélanges de polymères plastiques constitués de :
   a) 10 à 50 parties en poids d'un polymère greffé constitué de 60 à 85 % en poids d'un caoutchouc d'acrylate d'alkyle ou diénique fortement réticulé, particulaire et de 40 à 15 % en poids de méthacrylate d'éthyle, acrylonitrile, styrène, acrylate d'alkyle ou de leurs mélanges, polymérisés par greffage, et
   b) de 90 à 50 parties en poids d'un copolymère caoutchouteux particulaire partiellement réticulé constitué de 10 à 35 % en poids d'acrylonitrile et/ou de méthacrylate de méthyle et de 90 à 65 % en poids d'acrylate d'alkyle en $C_1$-$C_8$ ayant une teneur en gel de 60 à 99 % en poids et un diamètre moyen de particules ($d_{50}$) compris entre 0,1 et 0,6 $\mu$m.